# EUROPÄISCHE PATENTSCHRIFT

(11) **EP 3 803 114 B1**
(45) Veröffentlichungstag und Bekanntmachung des Hinweises auf die Patenterteilung: **08.04.2026**
(21) Anmeldenummer: 19727403.8
(22) Anmeldetag: 29.05.2019
(51) Int. Cl.: F03D 80/40

(54) **SENSORANORDNUNG FÜR EINE WINDKRAFTANLAGE**
SENSOR ARRANGEMENT FOR A WIND TURBINE
ARRANGEMENT DE CAPTEUR POUR UN AÉROGÉNÉRATEUR

(30) Priorität: 29.05.2018 DE 102018112825
(43) Veröffentlichungstag der Anmeldung: 14.04.2021
(73) Patentinhaber: VC VIII Polytech Holding ApS, 6740 Bramming (DK)
(72) Erfinder: MAI, Manuel, 81379 München (DE)
(74) Vertreter: Zacco Denmark A/S
(86) Internationale Anmeldenummer: PCT/EP2019/064067
(87) Internationale Veröffentlichungsnummer: WO 2019/229172

(56) Entgegenhaltungen:
- EP-A1- 2 565 444
- EP-A1- 2 932 094
- DE-A1- 102012 015 456
- US-A1- 2004 057 828
- US-A1- 2013 287 567

## Beschreibung

### TECHNISCHES GEBIET

Die vorliegende Erfindung bezieht sich auf eine Sensoranordnung zur Verwendung an einer Windkraftanlage, eine Windkraftanlage sowie ein Verfahren zum Betreiben einer Windkraftanlage.

### STAND DER TECHNIK

Windkraft wird als eine der saubersten, umweltfreundlichsten Energiequellen angesehen, die momentan verfügbar sind. In dieser Hinsicht haben Windkraftanlagen eine zunehmende Aufmerksamkeit erlangt. Eine Windkraftanlage weist üblicherweise einen Turm auf, an dessen Spitze eine Gondel mit einem Rotor mit einer Rotornabe mit Rotorblättern angeordnet ist, einen Generator und ein Getriebegehäuse. Die Rotorblätter fangen kinetische Energie des Windes ein und übertragen diese durch Rotationsenergie zum Drehen einer Welle, die sich in der Gondel befindet und die Rotorblätter verbindet, auf ein Getriebe oder, falls kein Getriebe verwendet wird, direkt auf einen Generator. Der Generator wandelt dann die mechanische Energie in elektrische Energie, die in ein Versorgungsnetz eingespeist werden kann.

Windkraftanlagen werden auf einen maximalen Ertrag aus der Windkraft gesteuert. Falls dabei maximale (auslegungsgemäße) Belastungen von Komponenten überschritten werden, kann es zu Schäden kommen. In der Folge kann es zu Totalausfällen kommen. Da die Fehlersuche und die Durchführung von Reparaturen zu extrem hohen Kosten führen, insbesondere bei Anlagen auf dem Meer, sind die Schadensprävention und die schnelle Analyse von Bauteildefekten und Schäden an Windkraftanlagen von großer Bedeutung.

Der Zustand eines Rotorblatts, zum Beispiel Verschleiß, Materialermüdung und andere Veränderungen, die durch Alterung oder Nutzung auftreten können, ist Gegenstand der Zustandsüberwachung von Windkraftanlagen. Durch die Kenntnis des Zustands können Wartungsarbeiten geplant werden, der gegenwärtige Wert der Anlage geschätzt werden und Sicherheitsauflagen des Gesetzgebers und Kunden erfüllt werden.

Bei der Überwachung von Betriebszuständen von Windkraftanlagen wird eine Mehrzahl von Sensoren verwendet. Zum Beispiel können Dehnungsmessungen zur Messung der Biegung eines Rotorblatts, Beschleunigungsmessungen zur Messung einer Beschleunigung eines Rotorblatts, oder andere Größen gemessen werden.

Aus DE 10 2014 223 662 A1 ist eine Sensoranordnung zum Anordnen in einem Rotorblatt einer Windkraftanlage bekannt, bei der Sensordaten, die innerhalb eines Rotorblatts erfasst werden, fusioniert werden. Die Sensoranordnung weist einen Drucksensor und einen mehrachsigen Magnetfeldsensor auf. Der Drucksensor stellt ein Drucksignal bereit, das einen Innendruck im Rotorblatt repräsentiert. Der mehrachsige Magnetfeldsensor stellt ein Magnetfeldsignal bereit, das eine Richtung des Erdmagnetfelds aus einer Perspektive des Rottorblatts repräsentiert. Die Sensoranordnung ist mit einer Auswerteelektronik vorgesehen zur Sensordatenfusion für Sensoren in dem Rotorblatt.

Die oben genannte Sensoranordnung weist zum Beispiel den Nachteil auf, dass Schäden nur unzureichend oder verspätet erkannt werden können.

US 2013/0287567 A1 beschreibt eine Windkraftanlage, bei welcher auf dem Rotorblatt und am Turm jeweils Sensoren angeordnet sind. Die Daten der Sensoren werden gemeinsam ausgewertet, um zu erkennen, ob sich das Rotorblatt und der Turm derart verbiegen, dass es zu einer Berührung des Rotorblatts mit dem Turm kommen könnte. Diese Technologie bietet jedoch keine Erkennung von Schäden an der Windkraftanlage. US2004/057828 A1 ist ein weiteres Dokument des Standes der Technik, das eine Sensoranordnung an einer Windkraftanlage offenbart.

Im Allgemeinen ist es erstrebenswert, Verbesserungen bei der Überwachung der Sensoren einer Windkraftanlage und/oder der Windkraftanlage selbst zu ermöglichen.

### ZUSAMMENFASSUNG DER ERFINDUNG

Der Erfindung liegt die Aufgabe zugrunde, eine Windkraftanlage oder ein Verfahren anzugeben, welche eine verbesserte Schadenserkennung oder Schadensanalyse ermöglicht.

Die Aufgabe wird durch eine Windkraftanlage mit den Merkmalen aus Anspruch 1 bzw. ein Verfahren mit den Merkmalen aus Anspruch 7 gelöst.

Gemäß einer Ausführungsform wird eine Windkraftanlange mit einer Sensoranordnung zur Verfügung gestellt. Die Sensoranordnung zur Verwendung an einer Windkraftanlage beinhaltet einen rotorblattbezogenen Sensor, der in oder an einem Rotorblatt angeordnet ist, und einen nicht-rotorblattbezogenen Sensor. Die Sensorsignale, welche dem rotorblattbezogenen Sensor zugeordnet sind, sind durch Fusion mit den Sensorsignalen, welche dem nicht-rotorblattbezogenen Sensor zugeordnet sind, verarbeitet. Die Fusion der Sensorsignale wird in Abhängigkeit vom Betriebszustand der Rotorblätter der Windkraftanlage durchgeführt. Gemäß einer anderen Ausführungsform wird ein Verfahren zum Betreiben einer Windkraftanlage zur Verfügung gestellt. Das Verfahren beinhaltet ein Erfassen der Sensordaten von der Sensoranordnung und ein Verarbeiten der Sensordaten.

### KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:
FIG. 1 eine schematische Darstellung einer Windkraftanlage gemäß hier beschriebenen Ausführungsformen;
FIG. 2 eine schematische Darstellung eines Teils einer Windkraftanlage mit rotorblattbezogenen und nicht-rotorblattbezogenen Sensoren gemäß hier beschriebenen Ausführungsformen;
FIG. 3 ein Blockschaltbild einer Sensoranordnung gemäß weiteren hier beschriebenen Ausführungsformen; und
FIG. 4 ein Ablaufdiagram eines Verfahrens zum Betreiben einer Windkraftanlage gemäß hier beschriebenen Ausführungsformen.

### WEGE ZUR AUSFÜHRUNG DER ERFINDUNG

Im Folgenden wird detaillierter Bezug genommen auf verschiedene Ausführungsformen der Erfindung, wobei ein oder mehrere Beispiele in den Zeichnungen veranschaulicht sind.

Windkraftanlagen können durch Sensoren in oder an den Rotorblättern (rotorblattbezogene) und/oder in anderen Teilen (nicht-rotorblattbezogene), beispielweise in oder an der Rotornabe, in oder an dem Turm und in oder an der Gondel, überwacht und geregelt werden. Durch rotorblattbezogene Sensoren lassen sich eine oder mehrere der folgende Anwendungen umsetzen oder Größen messen: individuelle Blattanstellung eines Rotorblatts, Auftriebsoptimierung eines Rotorblatts, Lastregelung eines Rotorblatts bzw. der Windkraftanlage, Lastmessung an einem Rotorblatt bzw. an der Windkraftanlage, Zustandsbestimmung von Komponenten der Windkraftanlage, zum Beispiel Zustandsbestimmung eines Rotorblatts, Eiserkennung, Lebensdauerschätzung von Komponenten der Windkraftanlage zum Beispiel eines Rotorblattes, Regelung auf Windfelder, Regelung auf Nachlaufeffekte des Rotors, Regelung der Windkraftanlage auf Lasten, Regelung der Windkraftanlage in Bezug auf benachbarte Windkraftanlagen, Prädiktive Wartung, und Unwuchterkennung. Durch nicht-rotorblattbezogene Sensoren, zum Beispiel in der Rotornabe, kann die Gravitationskraft und die Zentripetalkraft auf die Rotorblätter abgeleitet werden.

Ausführungsformen der vorliegenden Erfindung betreffen eine Sensoranordnung einer Windkraftanlage, die eine Kombination von rotorblattbezogenen und nicht-rotorblattbezogenen Sensoren enthält. Weiterhin betrifft die Erfindung die Verarbeitung der Sensordaten durch Fusion. Über die Fusion bzw. die Kombination von rotorblattbasierten Sensordaten mit nicht-rotorblattbasierten Sensordaten kann eine verbesserte Überwachung der Windkraftanlage erreicht werden. Zudem kann durch die Fusion der Sensordaten ein verbessertes Bild über den Zustand und den Betrieb der Windkraftanlage erreicht werden.

Fusion bzw. Fusionieren, wie hierin verwendet, umfasst ein Verarbeiten der rotorblattbasierten Sensordaten, wobei Störgrößen, z. B. durch die Lage des Rotorblattes zur Schwerkraft oder durch ein Schwingen des gesamten Rotors beim Einsatz des nicht-rotorblattbezogenen Sensors in der Rotornabe, berücksichtigt werden. Weiterhin kann ein Ereignis, wie zum Beispiel Naturgewalten (Blitzschlag, Vereisung, Sturm, Hagel, Überschwemmung usw.), Windstille oder Vogelschlag, erkannt werden. Erkennt das Verfahren ein Ereignis entweder aus einer Analyse bzw. Auswertung der rotorblattbasierten Sensordaten oder aus einer Analyse bzw. Auswertung der nicht-rotorblattbasierten Sensordaten, so können die Sensordaten der rotorblattbasierten Sensoren mit den Sensordaten der nicht-rotorbasierten Sensoren durch Fusion verarbeitet bzw. fusioniert werden. Erkennt das Verfahren eine Veränderung an der Windkraftanlage, wie zum Beispiel Blattzustand oder Antriebstrangzustand, so können die nicht-rotorblattbezogenen Sensoren zur Klassifizierung des Ereignisses verwendet werden. Dadurch kann eine Schadensanalyse erreicht werden, bei der die Größe, die Art und/oder der Ort der Störungen besser eingeschätzt werden können.

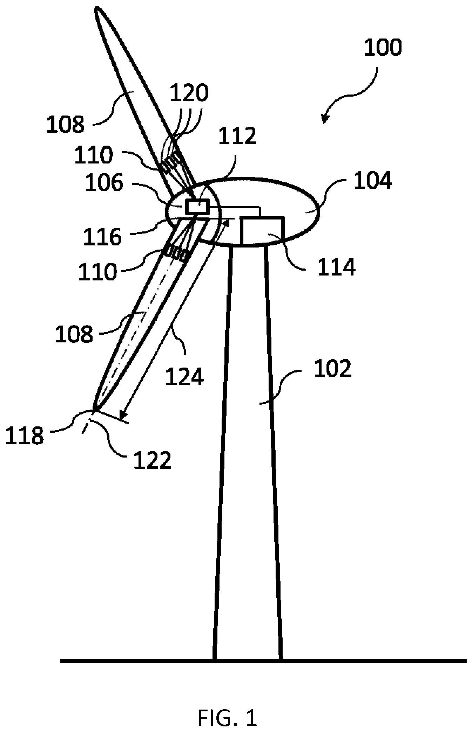

FIG. 1 zeigt eine Windkraftanlage 100. Die Windkraftanlage 100 beinhaltet einen Turm 102 und eine Gondel 104. An der Gondel 104 ist der Rotor befestigt. Der Rotor beinhaltet eine Rotornabe 106, an der die Rotorblätter 108 mit einer Blattwurzel 116 befestigt sind. Gemäß typischen Ausführungsformen hat der Rotor zumindest zwei Rotorblätter, insbesondere drei Rotorblätter. Das Rotorblatt 100 hat eine Blattachse 122 entlang seiner Längserstreckung. Die Länge 124 des Rotorblatts reicht von der Blattwurzel 116 zu der Blattspitze 118. Beim Betrieb der Windkraftanlage 100 bzw. der Windkraftanlage 100 rotiert der Rotor, d.h. die Rotornabe 106 mit den Rotorblättern 108 um eine Achse. Dabei wird ein Generator zur Stromerzeugung angetrieben. Weiterhin umfasst die Windkraftanlage 100 mehrere Sensoren, die zur optischen, elektrischen und/oder magnetischen Erzeugung der Sensorsignale ausgebildet sind. Die Sensoren können rotorblattbezogene und nicht-rotorblattbezogene Parameter erfassen, beispielweise Druck, Temperatur, Beschleunigung, Schwingung, Vibration, Dehnung usw. Rotorblattbezogene Sensordaten, wie hierin verwendet, bedeutet nicht unbedingt, dass sie im Rotorblatt generiert werden, was zum Beispiel bei Generatorvibrationen der Fall ist. Es ist zum Beispiel auch möglich, einen Eisansatz von einem Strukturschaden zu unterscheiden. Wie in FIG. 1 dargestellt, sind rotorblattbezogene Sensoren in oder an einem Rotorblatt 108 oder in oder an mehreren Rotorblätter zur Verfügung gestellt. Das Rotorblatt umfasst mehrere Sensoren 120, die eine Sensorgruppe 110 bilden. Nicht-rotorblattbezogene Sensoren sind in oder an einer oder mehrerer der folgenden Strukturen zur Verfügung gestellt: Rotornabe, Turm, Gondel. Die Sensoren sind mit einer Signalleitung oder mit Signalleitungen mit einer Auswerteeinheit 112 verbunden. Die Auswerteeinheit liefert ein Signal an eine Steuerung 114 der Windkraftanlage.

Gemäß einigen Ausführungsformen, die mit anderen Ausführungsformen kombiniert werden können, handelt es sich bei den rotorblattbezogenen Sensoren um faseroptische Dehnungs- und faseroptische Vibrationssensoren. Für faseroptische Sensoren wird ein optisches Signal mittels eines Lichtleiters, zum Beispiel einer optischen Faser, an die Auswerteeinheit 112 übertragen. Bei einem faseroptischen Sensor wird das eigentliche Sensorelement typischerweise innerhalb einer optischen Faser zur Verfügung gestellt, zum Beispiel in Form eines Faser-Bragg-Gitters.

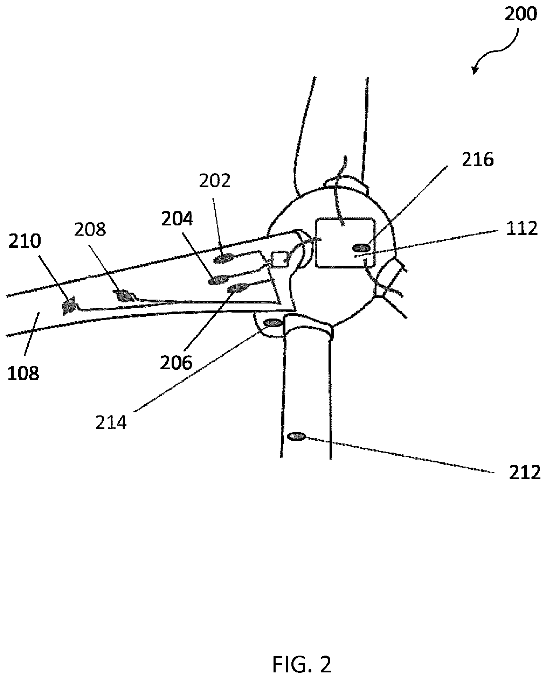

FIG. 2 zeigt einen Teil einer Windkraftanlage 100, wobei Abschnitte von drei Rotorblättern 108 dargestellt sind. Eine Anordnung eines ersten Dehnungssensors 202, eines zweiten Dehnungssensors 204 und eines dritten Dehnungssensors 206 ist jeweils in einem Rotorblatt 108 bereitgestellt. Ferner werden gemäß hier beschriebenen Ausführungsformen ein erster Vibrationssensor 208 und ein zweiter Vibrationssensor 210 bereitgestellt. Diese numerischen Werte sind nur beispielhaft. Es können auch geeignete andere Anzahlen, wie z. B. vier Dehnungssensoren oder drei Vibrationssensoren, verwendet werden. Die Signale der Sensoren werden an die Auswerteeinheit 112 zur Verfügung gestellt, zum Beispiel über Signalleitungen.

Für die Bestimmung der Blattlasten werden die Dehnungssensoren genutzt. Sie können in der Blattwurzel 116 des Rottorblatts 108 angebracht sein. Die Vibrationssensoren 208, 210 können an einer Position angebracht sein, die sich ungefähr an der halben Länge 124 des Rotorblatts 108 befindet. Gemäß einigen Ausführungsformen können die Dehnungssensoren 202, 204, 206 mit einem axialen Abstand (d. h entlang der Blattachse 122) zur Blattwurzel 116 von ca. 5 m oder weniger angebracht sein. Gemäß weiteren Ausführungsformen, die mit anderen hier beschriebenen Ausführungsformen kombiniert werden können, können die Vibrationssensoren 208, 210 in einem Bereich von ±5 m in axialer Richtung (entlang der Blattachse 122) von der Mitte des Rotorblatts 108 angebracht sein. Gemäß noch weiteren Ausführungsformen können die Vibrationssensoren 208, 210 in einem Bereich angebracht sein, der in einer Region liegt, die sich von der Mitte des Rotorblattes 108 hin zur Blattspitze 118 erstreckt.

Die Blattlasten an einer Windkraftanlage können aus den Blattbiegemomenten hergeleitet werden. Aus den Signalen der Dehnungssensoren 202, 204, 206 lässt sich das auf das Rotorblatt 108 wirkende Blattbiegemoment berechnen. Blattbiegemomente stellen für die Messtechnik im Allgemeinen eine mittelbare Messgröße dar. Zur Blattlastmessung werden die Blattlasten indirekt über die Messung der Blattdehnungen bestimmt. Die gemessenen Dehnungen stellen dabei die unmittelbare Messgröße dar. Über eine Kalibrierung des Messsystems kann die Übertragungsfunktion der Blattbiegemomente in die Dehnungssignale ermittelt werden. Durch Bildung einer Umkehrfunktion kann anschließend aus den gemessenen Dehnungssignalen auf die Blattbiegemomente geschlossen werden.

Der Quotient des Biegemoments mit der Verbiegung des Rottorblatts ist proportional zur Steifigkeit des Rotorblatts 108. Die Steifigkeit des Werkstoffs des Rotorblatts 108 kann als Maß für den Zustand bzw. die Festigkeit des Werkstoffs des Rotors angesehen werden. Dabei nimmt die Festigkeit ab, wenn einzelne Fasern in einem Faserverbundwerkstoff reißen oder die Verklebung der Fasern delaminiert. Somit lässt sich eine in-situ-Messung des Blattzustandes mit den beschriebenen Anordnungen bzw. Verfahren durchführen. Dabei ermöglicht die in-situ-Messung eine verbesserte Erkennung von Alterung, Materialermüdung oder ähnlichen Zuständen.

Durch die Verwendung von drei Dehnungssensoren 202, 204, 206 ist eine Redundanz und damit eine erhöhte Sicherheit gegenüber Ausfällen realisiert. Weiterhin ist es möglich, gemäß hier beschriebenen Ausführungsformen temperaturkompensierte Dehnungssensoren zu verwenden, insbesondere temperaturkompensierte faseroptische Dehnungssensoren. Durch Verwendung temperaturkompensierter Dehnungssensoren kann der Einfluss der Temperatur auf die Bestimmung der Blattbiegemomente minimiert werden. Faseroptische Dehnungssensoren haben darüber hinaus eine hohe Spitzen- und Dauerlastfestigkeit und ermöglichen eine hohe Zuverlässigkeit der Blattbiegemomentenbestimmung.

Gemäß hier beschriebenen Ausführungsformen befinden sich in dem axialen Bereich (entlang der Blattachse 122) ein erster Vibrationssensor 208 und ein zweiter Vibrationssensor 210. Mit Vibrationssensoren im Rotorblatt 108 können Vibrationen des Rotorblatts 108 bestimmt werden und Anwendungen zum Beispiel zur Blattzustandsüberwachung oder Eiserkennung realisiert werden. Die Vibrationssensoren 208, 210 können alternativ auch an dem Rotorblatt 108 angeordnet werden, ohne in dieses integriert zu sein. Durch die Verwendung von faseroptischen Sensoren kann eine zuverlässige Messung der Blattvibration ohne Beeinflussung durch elektromagnetische Felder oder hohe elektrische Ströme, wie z. B. Blitzeinschlag, ermöglicht werden. Faseroptische Sensoren können ohne elektrische Komponenten bereitgestellt werden. Hierdurch kann vermieden werden, dass ein Blitzeinschlag unmittelbar in elektronische Komponenten und/oder Kabel bzw. Signalkabel für elektronische Komponenten erfolgt.

Die Sensorgruppe 110 (in FIG. 1 dargestellt) der rotorblattbezogenen Sensoren, die einen ersten Dehnungssensor 202, einen zweiten Dehnungssensor 204, einen dritten Dehnungssensor 206, einen ersten Vibrationssensor 208 und einen zweiten Vibrationssensor 210 umfassen, sind jeweils in oder an einem Rotorblatt 108 zur Verfügung gestellt. Die nicht-rotorblattbezogenen Sensoren sind in oder an einer oder mehrerer Teilen der Windkraftanlage zur Verfügung gestellt, wie zum Beispiel Turm 212, Rotornabe 214, Gondel 216. Bei Ausführungsformen sind die nicht-rotorblattbezogenen Sensoren an Teilen der Windkraftanlage bereitgestellt, die von den Rotorblättern 108 verschieden sind. Die Signale der rotorblattbezogenen und nicht-rotorblattbezogenen Sensoren werden, zum Beispiel über Signalleitungen, an die Auswerteeinheit 112 zur Verfügung gestellt. Die Auswerteeinheit liefert die Sensorsignale an eine Steuerung 114 (in FIG. 1 dargestellt) der Windkraftanlage.

Die nicht-rotorblattbezogenen Sensoren können beispielweise Beschleunigungs-, Acoustic Emission-, Temperatur-, und/oder Schwingungssensor sein.

Es gibt die Möglichkeit, eine bestehende Windkraftanlage nachzurüsten. Beispielsweise können an einer vorhandenen Windkraftanlage bereits installierte Sensoren verwendet werden, und nur die Auswerteeinheit wird nachgerüstet.

Durch die Kombination bzw. die Fusion von rotorblattbasierten Sensordaten mit nicht-rotorblattbasierten Sensordaten kann eine verbesserte Überwachung der Windkraftanlage erzielt werden. Zudem kann durch die Fusion der Sensordaten ein verbessertes Bild über den Zustand und den Betrieb der Windkraftanlage erreicht werden, wodurch sich weitere Anwendungen ergeben können.

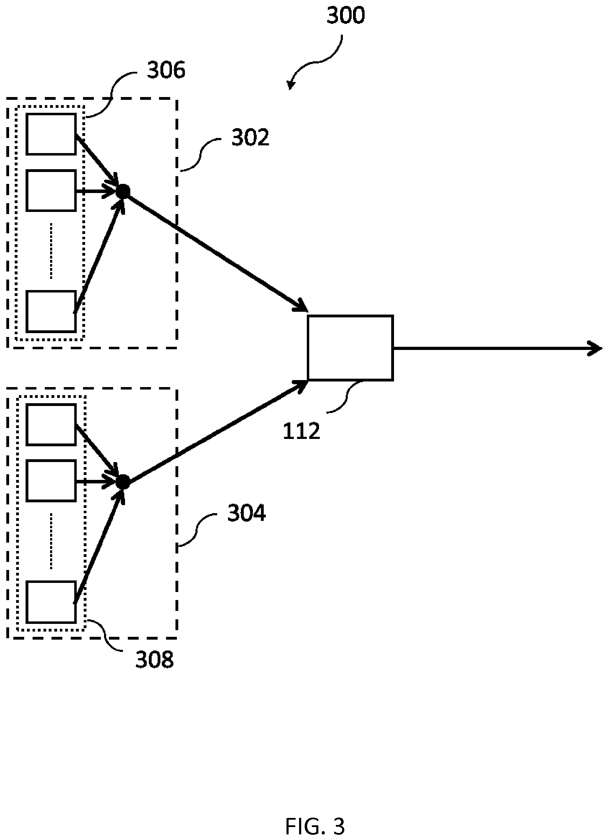

FIG. 3 zeigt ein Blockschaltbild 300 einer Sensoranordnung 200 gemäß einem Ausführungsbeispiel der vorliegenden Erfindung. Die Sensoranordnung 200 kann dabei im Zusammenhang mit der in FIG. 1 dargestellten Windkraftanlage 100 eingesetzt werden. Gemäß der vorliegenden Erfindung umfasst die Sensoranordnung 200 rotorblattbezogene 302 und nicht-rotorblattbezogene Sensoren 304. Die rotorblattbezogenen Sensoren 302 und die nicht-rotorblattbezogenen Sensoren 304 sind mit der Auswerteeinheit 112 verbunden. Die Auswerteeinheit 112 ist dazu ausgebildet, durch eine Fusion die Sensordaten zu verarbeiten. Die rotorblattbezogenen Sensoren 302 sind in einer gemeinsamen Sensorgruppe 306 angeordnet. Die nicht-rotorblattbezogenen Sensoren 304 sind in einer anderen gemeinsamen Sensorgruppe 308 angeordnet.

Erfindungsgemäß umfasst die Sensorgruppe der rotorblattbezogenen Sensoren Dehnungs- und Vibrationssensoren. Das Überwachen einer Windenergieanlage umfasst das Messen von Vibrationen mit zwei Vibrationssensoren in zwei unterschiedlichen Raumrichtungen (in einem kartesischen Koordinatensystem) und das Messen von Dehnungen bzw. Blattbiegemomenten in zumindest zwei, zum Beispiel drei unterschiedlichen Raumrichtungen. Insbesondere kann das Messen von Vibrationen das Messen von Frequenzverschiebungen von Vibrationen beinhalten. Weiterhin insbesondere kann das Messen von Vibrationen derart ausgestaltet sein, dass für die für die Regelung bzw. Steuerung und/oder die Zustandsbestimmung relevanten Signale keine Messung von absoluten Beschleunigungen und oder Messungen in Frequenzbereichen stattfindet. Für die Regelung bzw. Steuerung und/oder die Zustandsbestimmung der Windenergieanlage wird basierend auf den Vibrationssensoren lediglich eine Frequenzverschiebung ermittelt. Gemäß hier beschriebenen Ausführungsformen werden die Signale für die Überwachung oder Reglung, insbesondere für eine der oben genannten Anwendungen verwendet. Typischerweise wird die Dehnung in drei Raumrichtungen (in einem kartesischen Koordinatensystem) gemessen, so dass auch hier eine Dehnung mit beliebiger Ausrichtung in der Ebene der Blattwurzel ermittelt werden kann.

Durch die nicht-rotorblattbezogenen Sensoren 304, wie zum Beispiel Beschleunigungssensoren in der Rotornabe, kann die Gravitationskraft und die Zentripetalkraft ermittelt werden, welche auf die Nabe oder Rotorblätter wirkt.

Gemäß einigen Ausführungsformen, die mit anderen Ausführungsformen kombiniert werden können, weist die Auswerteeinheit 112 einen Signalwandler auf, der ein digitales Signal erzeugt. Das digitale Signal wird dann in ein optisches Signal gewandelt und übertragen. Die digitalisierte Übertragung direkt nach der Auswertung des Signals hat den Vorteil, dass das digitale optische Signal weniger anfällig als beispielsweise ein analoges Signal gegenüber Verfälschungseffekten insbesondere bei der optischen Übertragung und/oder Wandlung ist. Somit kann eine höhere Messgenauigkeit erreicht werden.

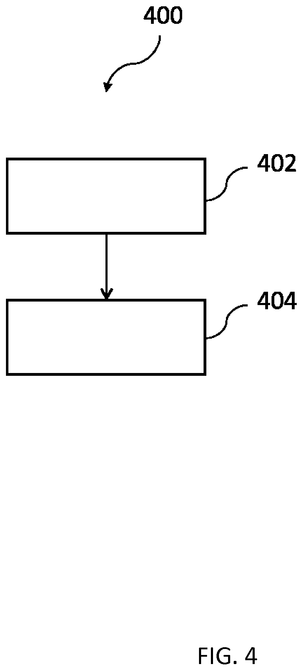

FIG. 4 zeigt ein Flussdiagramm eines Verfahrens 400 zum Betreiben einer Windkraftanlage gemäß Ausführungsformen der vorliegenden Erfindung. Das Verfahren 400 kann die Sensoranordnung 200 und die Windkraftanlage 100 gemäß den hier beschriebenen Ausführungsformen verwenden. Das Verfahren 400 umfasst in Schritt 402 ein Erfassen der Sensordaten, die von der Sensoranordnung ermittelt sind, und in Schritt 404 ein Verarbeiten der Sensordaten. Im Schritt 404 des Verarbeitens wird der rotorblattbezogene Sensor kalibriert. Bei der Kalibrierung des Messsystems (z.B. Condition Monitoring System oder Antriebstrang) können Störgrößen, durch die Lage des Rotorblattes zur Schwerkraft oder durch ein Schwingen des gesamten Rotors beim Einsatz des nicht-rotorblattbezogenen Sensors in der Rotornabe berücksichtigt werden. Weiterhin kann im Schritt 404 des Verarbeitens ein Ereignis, wie zum Beispiel Naturgewalten (Blitzschlag, Vereisung, Sturm, Hagel, Überschwemmung usw.), Windstille oder Vogelschlag, erkannt werden. Es kann auch ein sehr schwaches Ereignis erkannt werden wie zum Beispiel eine Vorderkantenablösung (Delaminierung an der Rotorblatt-Vorderkante). Erkennt das Verfahren ein Ereignis entweder aus einer Analyse bzw. Auswertung der rotorblattbasierten Sensordaten oder aus einer Analyse bzw. Auswertung der nicht-rotorblattbasierten Sensordaten, so können die Sensordaten der rotorblattbasierten Sensoren mit den Sensordaten der nicht-rotorbasierten Sensoren durch Fusion verarbeitet bzw. fusioniert werden. So können die nicht-rotorblattbasierten Sensordaten zur Validierung der Ergebnisse aus einer Analyse bzw. Auswertung der rotorblattbasierten Sensordaten genutzt werden. Erkennt das Verfahren eine Veränderung an der Windkraftanlage, wie zum Beispiel eine Veränderung des Blattzustands oder des Antriebstrangzustands, so können die nicht-rotorblattbezogenen Sensoren zur Klassifizierung des Ereignisses verwendet werden. Erkennt das Verfahren ein Ereignis aus einer Analyse bzw. Auswertung der rotorblattbasierten Sensordaten, und die Analyse bzw. Auswertung der nicht-rotorblattbasierten Sensordaten erkennt das Ereignis nicht, so können die nicht-rotorblattbasierten Sensordaten zur Validierung der Ergebnisse aus einer Analyse bzw. Auswertung der rotorblattbasierten Sensordaten genutzt werden. Dadurch kann eine Schadensanalyse erreicht werden, bei der die Größe, die Art und/oder der Ort der Störungen besser eingeschätzt werden können.

Es wird anlassabhängig fusioniert. Es wird abhängig vom Betriebszustand, wie zum Beispiel, Rotorgeschwindigkeit, Temperatur, Eislagerung, Anstellwinkel der Rotorblätter usw., fusioniert. Es wird ein oberer Schwellenwert, der für das Verfahren geeignet ist, festgelegt. Der obere Schwellenwert ist ein definierter oberer Grenzwert für die Rotorgeschwindigkeit, bei dessen Überschreiten ein sicherer Betrieb der Windkraftanlage nicht mehr zulässig oder nicht mehr möglich ist. Darauffolgend kann auch nicht fusioniert werden.

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt.

## Patentansprüche

1. Windkraftanlage (100) umfassend eine Sensoranordnung (200), umfassend:
eine Sensorgruppe (110, 306) von rotorblattbezogenen Sensoren (202, 204, 206, 208, 210, 302), die in oder an einem Rotorblatt angeordnet sind und Dehnungs- und Vibrationssensoren umfassen; und
mindestens einen nicht-rotorblattbezogenen Sensor (212, 214, 216), wobei die Sensorsignale, die den rotorblattbezogenen Sensoren (202, 204, 206, 208, 210, 302) zugeordnet sind, durch Fusion mit den Sensorsignalen, die dem nicht-rotorblattbezogenen Sensor (212, 214, 216) zugeordnet sind, verarbeitet sind, wobei die Fusion der Sensorsignale, die den rotorblattbezogenen Sensoren (202, 204, 206, 208, 210, 302) zugeordnet sind, mit den Sensorsignalen, die dem nicht-rotorblattbezogenen Sensor (212, 214, 216) zugeordnet sind, in Abhängigkeit vom Betriebszustand der Rotorblätter der Windkraftanlage (100) durchgeführt wird, und **dadurch gekennzeichnet, dass** die Fusion der Sensorsignale, die den rotorblattbezogenen Sensoren (202, 204, 206, 208, 210, 302) zugeordnet sind, mit den Sensorsignalen, die dem nicht-rotorblattbezogenen Sensor (212, 214, 216) zugeordnet sind, nicht durchgeführt wird, wenn die Rotorgeschwindigkeit einen oberen Schwellenwert überschreitet.

2. Windkraftanlage (100) nach Anspruch 1, wobei der rotorblattbezogene Sensor (202, 204, 206, 208, 210) und/oder der nicht-rotorblattbezogene Sensor (212, 214, 216) zur optischen, elektrischen und/oder magnetischen Erzeugung der Sensorsignale ausgebildet sind.

3. Windkraftanlage (100) nach einem der vorhergehenden Ansprüche, wobei der rotorblattbezogene Sensor (202, 204, 206, 208, 210) und/oder der nicht-rotorblattbezogene Sensor (212, 214, 216) jeweils ein Druck-, ein Beschleunigung-, ein Temperatur-, ein Schwingung-, ein Dehnungs-, ein Eismengen- und/oder eines Schallemission- Signal bereitstellt.

4. Windkraftanlage (100) nach einem der vorhergehenden Ansprüche, wobei der nicht-rotorblattbezogene Sensor in oder an einer oder mehrerer der folgenden Strukturen der Windkraftanlage (100) angeordnet ist: Rotornabe, Turm, Gondel.

5. Windkraftanlage (100) nach einem der vorhergehenden Ansprüche, wobei der Betriebszustand der Rotorblätter der Windkraftanlage (100) die Rotorgeschwindigkeit, die Temperatur, die Eisablagerung oder der Anstellwinkel der Rotorblätter ist.

6. Windkraftanlage (100) nach einem der vorgehenden Ansprüche, die eine Steuerung (114) zum Erfassen und Verarbeiten der Sensordaten, welche von der Sensoranordnung (200) ermittelt sind, aufweist.

7. Verfahren (400) zum Betreiben einer Windkraftanlage (100) nach einem der Ansprüche 1 bis 6, wobei das Verfahren (400) die folgenden Schritte umfasst:
Erfassen (402) der Sensordaten, die von der Sensoranordnung ermittelt sind; und
Verarbeiten (404) der Sensordaten.

8. Verfahren (400) nach Anspruch 7, bei dem im Schritt des Verarbeitens (404) der rotorblattbezogene Sensor kalibriert wird, wobei der nicht-rotorblattbezogene Sensor bei der Kalibrierung berücksichtigt wird.

9. Verfahren (400) nach Anspruch 7 oder 8, bei dem im Schritt des Verarbeitens (404) ein Ereignis, typischerweise ein Blitzschlag, erkannt wird.

10. Verfahren (400) nach einem der Ansprüche 7 bis 9, bei dem in dem Schritt des Verarbeitens (404) die Sensordaten des rotorblattbezogenen Sensors mit den Sensordaten des nicht-rotorblattbezogenen Sensors durch Fusion verarbeitet werden.

11. Verfahren (400) nach einem der Ansprüche 7 bis 10, bei dem im Schritt des Verarbeitens (404) die Sensordaten des rotorblattbezogenen Sensors mit den Sensordaten des nicht-rotorblattbezogenen Sensors validiert werden.

12. Verfahren (400) nach einem der Ansprüche 7 bis 11, bei dem im Schritt des Verarbeitens (404) das Ereignis klassifiziert wird.

## Claims

1. A wind turbine (100), comprising a sensor arrangement (200), comprising:
a sensor group (110, 306) of rotor blade-related sensors (202, 204, 206, 208, 210, 302) which are arranged in or on a rotor blade and comprise strain and vibration sensors; and
at least one not rotor blade-related sensor (212, 214, 216), wherein the sensor signals associated with the rotor blade-related sensors (202, 204, 206, 208, 210, 302) are processed through fusion with the sensor signals associated with the not rotor blade-related sensor (212, 214, 216), wherein the fusion of the sensor signals associated with the rotor blade-related sensors (202, 204, 206, 208, 210, 302) with the sensor signals associated with the not rotor blade-related sensor (212, 214, 216) is performed depending on the operating state of the rotor blades of the wind turbine (100), and **characterised in that** the fusion of the sensor signals associated with the rotor blade-related sensors (202, 204, 206, 208, 210, 302) with the sensor signals associated with the not rotor blade-related sensor (212, 214, 216) is not performed if the rotor speed exceeds an upper threshold value.

2. The wind turbine (100) according to claim 1, wherein the rotor blade-related sensor (202, 204, 206, 208, 210) and/or the not rotor blade-related sensor (212, 214, 216) are configured for optical, electric and/or magnetic generation of the sensor signals.

3. The wind turbine (100) according to any one of the preceding claims, wherein the rotor blade-related sensor (202, 204, 206, 208, 210) and/or the not rotor blade-related sensor (212, 214, 216) each provide a pressure, acceleration, temperature, oscillation, strain, ice quantity or noise emission signal.

4. The wind turbine (100) according to any one of the preceding claims, wherein the not rotor blade-related sensor is arranged in or on one or more of the following structures of the wind turbine (100): rotor hub, tower, nacelle.

5. The wind turbine (100) according to any one of the preceding claims, wherein the operating state of the rotor blades of the wind turbine (100) is the rotor speed, the temperature, the ice accumulation or the angle of attack of the rotor blades.

6. The wind turbine (100) according to any one of the preceding claims, having a control (114) for collecting and processing the sensor data determined by the sensor arrangement (200).

7. A method (400) for operating a wind turbine (100) according to any one of the claims 1 to 6, the method (400) comprising the following steps:
collecting (402) the sensor data determined by the sensor arrangement; and
processing (404) the sensor data.

8. The method (400) according to claim 7, where, in the step of processing (404), the rotor blade-related sensor is calibrated, wherein the not rotor blade-related sensor is taken into consideration for the calibration.

9. The method (400) according to claim 7 or 8, where, in the step of processing (404), an event, typically a lightning strike, is recognised.

10. The method (400) according to any one of claims 7 to 9, where, in the step of processing (404), the sensor data of the rotor blade-related sensor is processed with the sensor data of the not rotor blade-related sensor through fusion.

11. The method (400) according to any one of claims 7 to 10, where, in the step of processing (404), the sensor data of the rotor blade-related sensor is validated with the sensor data of the not rotor blade-related sensor.

12. The method (400) according to any one of claims 7 to 11, where, in the step of processing (404), the event is classified.

## Revendications

1. Éolienne (100) comprenant un agencement de capteurs (200), comprenant :
un groupe de capteurs (110, 306) de capteurs liés aux pales de rotor (202, 204, 206, 208, 210, 302), lesquels sont disposés dans ou sur une pale de rotor et comprennent des capteurs de déformation et de vibration, et
au moins un capteur non lié aux pales de rotor (212, 214, 216), dans laquelle les signaux de capteurs associés aux capteurs liés aux pales de rotor (202, 204, 206, 208, 210, 302) sont traités par fusion avec les signaux de capteurs associés au capteur non lié aux pales de rotor (212, 214, 216), dans laquelle la fusion des signaux de capteurs associés aux capteurs liés aux pales de rotor (202, 204, 206, 208, 210, 302) avec les signaux de capteurs associés au capteur non lié aux pales de rotor (212, 214, 216) est effectuée en fonction de l'état de fonctionnement des pales de rotor de l'éolienne (100), et **caractérisée en ce que** la fusion des signaux de capteurs associés aux capteurs liés aux pales de rotor (202, 204, 206, 208, 210, 302) avec les signaux de capteurs associés au capteur non lié aux pales de rotor (212, 214, 216) n'est pas effectuée lorsque la vitesse du rotor dépasse une valeur de seuil supérieure.

2. Éolienne (100) selon la revendication 1, dans laquelle le capteur lié aux pales de rotor (202, 204, 206, 208, 210) et/ou le capteur non lié aux pales de rotor (212, 214, 216) sont configurés pour la génération optique, électrique et/ou magnétique des signaux de capteurs.

3. Éolienne (100) selon l'une quelconque des revendications précédentes, dans laquelle le capteur lié aux pales de rotor (202, 204, 206, 208, 210) et/ou le capteur non lié aux pales de rotor (212, 214, 216) fournissent chacun un signal de pression, d'accélération, de température, de vibration, de déformation, de quantité de glace et/ou d'émission acoustique.

4. Éolienne (100) selon l'une quelconque des revendications précédentes, dans laquelle le capteur non lié aux pales de rotor est disposé dans ou sur une ou plusieurs des structures suivantes de l'éolienne (100) : le moyeu de rotor, la tour, la nacelle.

5. Éolienne (100) selon l'une quelconque des revendications précédentes, dans laquelle l'état de fonctionnement des pales de rotor de l'éolienne (100) est la vitesse du rotor, la température, le dépôt de glace ou l'angle de calage des pales de rotor.

6. Éolienne (100) selon l'une quelconque des revendications précédentes, laquelle comprend une commande (114) pour la détection et le traitement des données de capteurs qui sont déterminées par l'agencement de capteurs (200).

7. Procédé (400) pour faire fonctionner une éolienne (100) selon l'une quelconque des revendications 1 à 6, lequel procédé (400) comprend les étapes suivantes :
la détection (402) des données de capteurs, lesquelles sont déterminées par l'agencement de capteurs ; et
le traitement (404) des données de capteurs.

8. Procédé (400) selon la revendication 7, dans lequel, lors de l'étape de traitement (404), le capteur lié aux pales de rotor est calibré, le capteur non lié aux pales de rotor étant pris en compte lors de la calibration.

9. Procédé (400) selon la revendication 7 ou 8, dans lequel, lors de l'étape de traitement (404), un événement, typiquement un foudroiement, est détecté.

10. Procédé (400) selon l'une quelconque des revendications 7 à 9, dans lequel, lors de l'étape de traitement (404), les données de capteurs du capteur lié aux pales de rotor sont traitées par fusion avec les données de capteurs du capteur non lié aux pales de rotor.

11. Procédé (400) selon l'une quelconque des revendications 7 à 10, dans lequel, lors de l'étape de traitement (404), les données de capteurs du capteur lié aux pales de rotor sont validées avec les données de capteurs du capteur non lié aux pales de rotor.

12. Procédé (400) selon l'une quelconque des revendications 7 à 11, dans lequel, lors de l'étape de traitement (404), l'événement est classifié.
